# EUROPEAN PATENT APPLICATION

(11) **EP 2 680 556 A1**
(43) Date of publication of application: **01.01.2014**
(21) Application number: 12250128.1
(22) Date of filing: 29.06.2012
(51) Int. Cl.: H04M 3/533, H04M 3/42

(54) **Voicemail system**

(71) Applicant: British Telecommunications Public Limited Company, London EC1A 7AJ (GB)
(72) Inventor: The designation of the inventor has not yet been filed
(74) Representative: Cardus, Alan Peter

(57) **Abstract**

A voicemail system receives an incoming call from a calling party. The voicemail system records an audio message received from the calling party as part of the incoming call and provides to the calling party a notification of a network location. At the network location the calling party has access to a representation of the audio message from the calling party recorded on the voicemail system.

## Description

The present invention relates to telecommunications in general and more specifically to an enhanced voicemail system.

Voicemail is generally regarded as an application or service whereby a first telecommunications service subscriber (the calling party) initiates a call to a second telecommunications service subscriber (the called party) and, upon failing to be connected directly with the called party, the unanswered incoming call to the called party is diverted to a messaging service where information intended for the called party may be provided by the calling party and stored (e.g. in the form of a voicemail message) by the provider of the messaging service for the called party to access at a later date or time.

When the calling party has finished leaving the voicemail message, the connection to the voicemail system terminates. After terminating the connection, the calling party has no way to access the voicemail message again after leaving it. The voicemail message is stored in the called party's inbox and is accessible to the called party but not to the calling party.

### STATEMENT OF INVENTION

The invention addresses shortcomings in conventional voicemail systems by way of an enhanced voicemail system providing to the calling party at a network location, access to a representation of a recorded voicemail message. The representation of a recorded voicemail message will optionally comprise at least one of an audio recording and a transcription of the recorded message.

A voicemail system receives an incoming call from a calling party. The voicemail system records an audio message received from the calling party as part of the incoming call and provides to the calling party a notification of a network location. At the network location the calling party has access to a representation of an audio message from the calling party recorded on the voicemail system. The incoming call will, typically, be a call directed to a called party and redirected to connect the calling party to the voicemail system.

The enhanced voicemail system enables a calling party who has recorded a message for a called party to access at a different location and at a later occasion the recorded message and to listen to or view the message with a view to reviewing the message.

Depending on the format in which the representation of the recorded message is presented, the calling party may have the option of taking a copy for their records.

A voicemail system comprises an interface for receiving an incoming call; (as define, above); a store for recording an audio message from the calling party received as part of the call; a processor for providing to the calling party a notification of a network location and an interface for providing at the network location to the calling party, access to a representation of the audio message from the calling party recorded to the store.

Optionally, the first network location is a location in a first network and the second network is a location in a second network. Other, optional aspects of the invention are set out in the appended claims.

### BRIEF DESCRIPTION OF THE DRAWINGS

In order to aid understanding, embodiments of the invention will now be described by way of example with reference to the drawings in which:
Figures 1 to 3 show in block diagram form, a system according to aspects of the present invention;
Figures 4 to 7 show schematic representations of typical screen displays generated according to the invention;
Figure 8 shows a representation of signal flow according to an aspect of the invention.

### DETAILED DESCRIPTION OF EMBODIMENTS

The enhanced voicemail system operates according to a method in which the voicemail system receives a call from a calling party. Typically, the received call will have been originally directed from the calling party's phone to a called party's phone and then redirected (e.g. on no answer by the called party) to connect the calling party to the voicemail system. The voicemail system allows the calling party the opportunity to record a message for the called party. The enhanced voicemail system described in detail, below, provides to the calling party the ability to review the recorded message at a later time or date, i.e. following termination of the call during which the message was recorded. That is the enhanced voicemail system enables a mechanism for a calling party who has recorded a message for a called party to access the recorded message at a later occasion and to listen to the message with a view to reviewing the message. Depending on the format in which the representation of the recorded message is presented, the calling party may have the option of talking a copy for their records. Advantageously, the calling party is able to enjoy these benefits without having to subscribe to the voicemail service.

In more detail, the enhanced voicemail system provides to the calling party a notification of a network location; and provides through the network location to the calling party, access to a representation of the recorded voicemail message. According to one aspect, the enhanced voicemail system additionally provides to the calling party the ability to check the status of a recorded message at a later time or date, i.e. following termination of the call during which the message was recorded.

According to various embodiments, notification of a second network location comprises an indicator from which an internet protocol address of the second network location is derivable; the second network location is dedicated to the calling party; the notification is provided to the calling party outside of the incoming call. According to various further embodiments, the notification is provided to the calling party as part of the call; the representation of the recorded message comprises at least one of an audio recording and a transcription of the recorded message.

The enhanced voicemail system, as described in detail below, creates value for the calling party in that they are now able to simply obtain enhanced access to voicemail messages recorded for a called party. As a result of the enhanced access, a calling party can decide to record a further voicemail message, for example to correct an ambiguity in a previously recorded message. The enhanced voicemail service also creates value for the voicemail service provider in improving, in this way, the quality of messages provided by the voicemail service to their subscribers (i.e. the called parties).

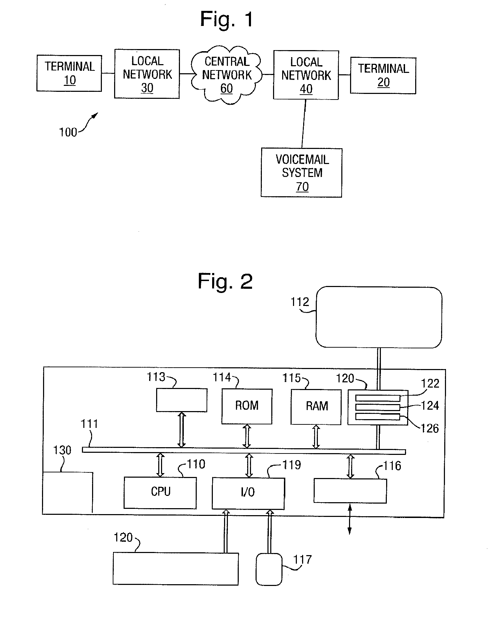

**Figure 1** depicts a voicemail communications system 100 according to one embodiment of the present invention. The voicemail communications system of Figure 1 may form part of a public telecommunications network. A conventional public telecommunications network comprises a relatively small number of interconnected main switches forming a core or central network and a larger number of local switches forming part of several local networks. Each local switch is connected to one or more main switches and is connected along local access lines of a local communication network to several items of subscriber equipment such as telephone instruments provided for users of the network.

As shown in Figure 1, voicemail communications system 100 comprises calling party communication terminal device 10, local communication network 30, central communications network 60, local communication network 40, called party communication terminal device 20 and voicemail system 70. It will be recognized that alternative embodiments of the present invention may embody variations in system 100, for example calling party communication terminal device 10, called party communication terminal device 20 and voicemail system 70 may all be connected directly to local communication network 30.

Communication terminal devices 10, 20 include any voice communication devices, such as fixed, landline telephones, cellular telephones, other telephones, including soft phones, communicating via internet protocol (IP) or any other device capable of providing voice communications over any form of telephone network.

Local communication networks 30, 40 may comprise any communication system capable of routing voice communications between communication terminal device 10 and communication terminal device 20. For example, local communication networks 30, 40 may comprise private branch exchanges, concentrators and local switching centres with one or more telephone switches.

Central communications network 60 may comprise any communications network suitable for conveying voice traffic at suitably high volumes in any form, including Ethernet, MPLS, SDH, ATM and IP networks.

Voicemail system 70 provides for storage of voicemail messages for a called party associated with communication terminal device 20. Typically, voicemail system 70 also provides for storage of voicemail messages for a plurality of further users associated with additional communication terminal devices (not shown). Voicemail system 70 may be a physical answering machine providing storage in physical media, such as tape or disc or semiconductor memory. Voicemail system 70 may be a service provided, e.g., by the provider of communications services to the called party on terminal 20 and to other users. Voicemail system 70 may be embodied in a network server (not shown) located in local communication network 40, central communications network 60 or elsewhere. The network server may store messages in local semiconductor memory or local or remote disc storage. The machine or service may store voicemail messages for a specific called party and only provide read access to these messages to the called party accessing the voicemail system from their own telephone or upon presentation of appropriate credentials. The called party may access the voicemail system to access messages, alter configuration settings, etc.

As used here, a voicemail message is any message comprising an audio element that is recorded for a user by voicemail system 70, whether in analog or digital form. For example, the message may comprise audio with or without associated pictorial elements, such as video.

Calling party communication terminal device 10 is configured to initiate a communication (referred to as a call) to called party communication terminal device 20 via networks 30, 40, 60. A call may be any communication from communication terminal device 10 to communication terminal device 20. When a called party does not answer a call, then the call is directed to voicemail system 70. For example, the call may go from calling party communication terminal device 10 to local communication network 30; local communication network 30 then routes the communication through central communications network 60 to local communication network 40; local communication network 40 determines that the communication is for the called party and routes the communication to called party communication terminal device 20. When the called party does not answer the call, it is redirected or re-routed to voicemail system 70. For example, the call may be re-routed across local network 40 to voicemail system 70.

Voicemail system 70 may present the calling party with a greeting and instructions on how to leave a voicemail message. For example, a calling party may select an option to leave a voicemail message. In one embodiment, an indication is sent from voicemail system 70 to communication terminal device 10 indicating that the calling party should leave a voicemail message after a signal from voicemail system 70. In an alternative embodiment, the calling party is asked to provide signals in order to direct operation of voicemail system 70 in recording a voicemail message. Suitable signals may be generated using a keypad on communication terminal device 10. For example, the calling party may press the ^{*} key to start recording and the # key to end recording. Alternatively, a calling party may end recording by terminating the connection (hanging up). Once voicemail system 70 is in recording mode, any audio sent by the calling party via communication terminal device 10 is recorded by voicemail system 70 as a voicemail message. The voicemail message left by the calling party may then be accessed by the called party at a later time convenient to the called party.

A typical architecture for a server or other form of computer apparatus on which software implementing the invention can be run, is shown, by way of example, in **Figure 2**. The architecture of each server or other form of computer apparatus of the voicemail system comprises a central processing unit (CPU) 110 for executing computer apparatus programs and managing and controlling the operation of the computer apparatus. The CPU 110 is connected to via a bus 111 to a variety of devices including solid-state memory devices including non-volatile ROM 114, volatile RAM 115 and non-volatile data storage means. The non-volatile data storage means may comprise one or more hard disc drives 120; in addition there may be provided removable non-volatile data storage means (not shown), such as removable hard disc drives or optical media (for example rewritable or recordable DVDs).

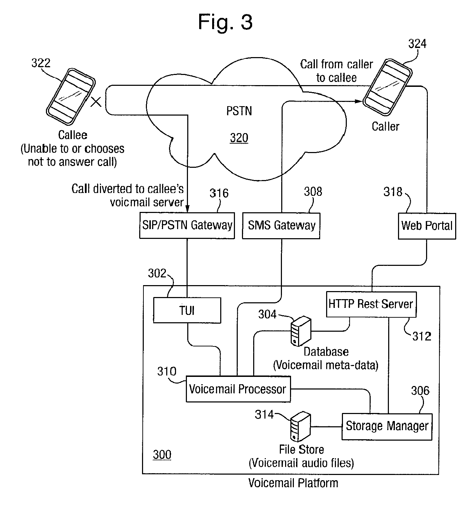

The architecture further comprises one or more network interface 116 (one shown) for interfacing to and exchanging data via one or more networks (not shown) such as a mobile or landline telephony network or an IP network underpinning the various connections shown in Figures 1 and 3. The network interface(s) may be a telephone network interface, local area network (LAN) adaptor connecting to a LAN or other network interface of conventional design familiar to persons of skill in the art. The LAN may itself be connected to other LANs and wide area networks (WANs) to enable the apparatus to communicate with and exchange data with other computer apparatuses. Alternatively, the network interface may be a DSL modem, or similar, that provides a connection to a WAN, such as the internet or an intranet, which enables communications with further networks.

The architecture also, optionally, includes user input/output devices such as a pointer device 117 and keyboard 118 connected to the bus 111 via input/output port 119, as well as a display 112. The computer apparatus is powered by power supply unit 130, typically obtaining power from an external power grid or internal battery (not shown). The skilled person will understand that this architecture is not limiting, but is merely an example of typical computer apparatus architectures which may be used to implement a modern communication terminal device or a server. The computer apparatus may also be a distributed system, comprising a number of computer apparatuses communicating through respective interface ports 116.

Non-volatile data storage means 120 comprises an operating system 122 and may comprise one or more application programs 124. Operating system 122 comprises the software that the computing apparatus requires to operate, communicate with other computer apparatuses, receive input from users, display outputs and results to users, etc. Application programs 124 can be executed by the apparatus in order to provide additional functionality. Non-volatile data storage means 120 further comprises computer apparatus code 126 which can be executed in order to perform various elements of a method according to the present invention, for example such as the one described below and illustrated in the drawings. It will be understood that computer apparatus code 126 may comprise a single integrated application or a number of different modules that are accessed separately to execute a method according to the present invention. Each module may perform the functionality of one or more of the processes (for example detecting an input or generating a message), which comprise components of present invention.

**Figure 3** shows a voicemail system of the invention in more detail.

According to the invention, the voicemail system provides an enhanced service to calling parties. Voicemail platform 300 comprises voicemail processor 310 (e.g. complying with the computer architecture of Figure 2) arranged in communication with other components of voicemail platform 300, as follows: telephone user interface (TUI) 302, voicemail metadata database 304 and storage manager 306. TUI 302 provides access from called party's terminal device 322 to called party's voicemail box. Voicemail metadata database 304 provides storage for information relating to voicemail messages stored in file store 314. For example, voicemail metadata database 304 stores time of receipt, length and read status for each voicemail message left for the called party.

Storage manager 306 is arranged in communication with file store 314 for storing and retrieving voicemail audio files. The voicemail audio files left for the called party stored in file store 314 represent the contents of the called party's voicemail box. Voicemail platform 300 further comprises a HTTP server (e.g. HTTP Rest server 312), which is arranged in communication with other components of voicemail platform 300, as follows: voicemail metadata database 304 and storage manager 306. A number of connections are arranged external to voicemail platform 300. Voicemail processor 310 is arranged in communication with short message service (SMS) gateway 308. TUI 302 is arranged in communication with SIP/PSTN gateway 316. HTTP Rest server 312 is arranged in communication with web portal 318. SMS gateway 308 is arranged in communication with PSTN 320 and, via the PSTN is communicable with a number of telephone terminal devices, including calling party terminal device 324 for exchange of SMS messages. SIP/PSTN gateway 316 is arranged in communication with PSTN 320 and, via the PSTN is communicable with a number of telephone terminal devices, including called party terminal device 322 for receipt of PSTN telephone calls. According to a further aspect of the invention, SIP/PSTN gateway 316 is arranged to receive SIP telephone calls via a data network, such as an IP network (not shown) from calling party terminal device 324. Web portal 318 is arranged in communication with calling party terminal device 324 via a data network (not shown). For example web portal 318 may connect to calling party terminal device 324 via a mobile phone data network. According to a further aspect of the invention, the calling party may connect with web portal 318 using a network-connected device (not shown) different to calling party terminal device 324.

### Leaving a Voicemail Message

When enabled by the called party, calling parties who leave a message for the called party are presented with a prompt or other notification that the enhanced service providing access to a representation of the recorded voicemail message is available. For example, a voice message may be played to the calling party on reaching the voicemail system similar to: "if you would like to receive a copy of this message for your records, please press 22# after leaving your message and you will receive an SMS text with a link to your message". In an alternative embodiment, the prompt may offer notification by an alternative mechanism. For example, the calling party on reaching the voicemail system may be instructed to enter a code (e.g. DTMF) sequence to initiate sending of an email to the calling party, where the email contains a link indicating the network location (e.g. that of web portal 318) providing access to a representation of the recorded voicemail message left by the calling party.

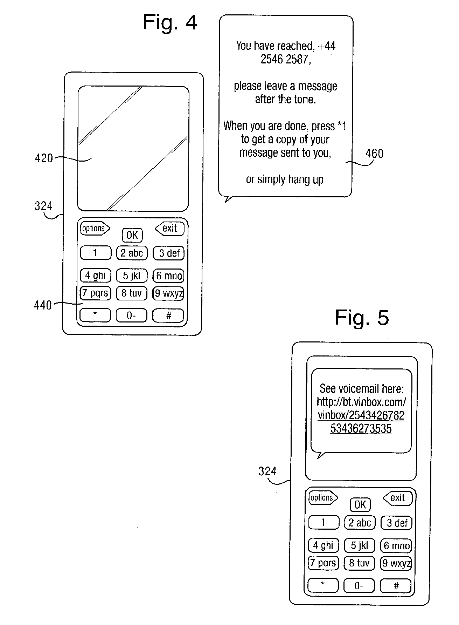

Figure **4** shows calling party's communication terminal device 324 (here represented by way of example as a mobile device) with display screen 420 and keyboard 440 and a separate representation 460 of a typical content which may be communicated via a loudspeaker (not shown) on calling party's communication terminal device 324 or appear on display screen 420 including instructions received from the voicemail system. As shown in the example content of Figure 4, these instructions comprise instructions relating to recording a voice message: "you have reached +44 2546 2587 please leave a message after the tone"; and In addition, instructions relating to accessing a copy of the recorded message: "When you are done, press *1 to get a copy of your message sent to you, or simply hang up".

According to further aspect, the calling party may be identified as an existing subscriber or user of the called party's voicemail service and automatically receive a push notification from a voicemail system webserver of a network location providing access to a representation of the recorded voicemail message left by the calling party.

### Sending Notification to Calling party

The voicemail system may send a notification to the calling party outside of the call. For example, the system may send an SMS message or an email to the calling party. The notification indicates, by means of a hyperlink or web address or other network resource indicator, a network location, such as a webpage, through which the voice message left by the calling party (or a representation thereof) is accessible. For example, a web portal (such as 318 in Figure 3) may be operated by the voicemail system or independently operated but provides access to information from the voicemail system. As part of the enhanced service, the calling party can access via the web portal a representation of the message they recorded

Following the SMS case, the calling party leaves a message on the called party's voicemail service and then enters a code (e.g. by pressing keys for 22#) at the end of the message. The calling party then receives confirmation that the voicemail service has accepted the calling party's request. For example, the voicemail system may play to the calling party a voice message similar to "thank you, a link to your message will be texted to 0123 45678". In an alternative embodiment, the system may confirm "thank you, a link to the message will be emailed to name@bt.com"

### Voicemail System Acquires the Address of the Calling party.

According to one aspect of the invention, the voicemail system monitors incoming calls and detects a network location associated with the calling party's communication terminal device. For example, the calling party's terminal device network location may be divined from a CLI (or calling line identity) associated with the calling party's telephone connection. The network location can then be used to direct an SMS message to the calling party at the terminal used to access the voicemail system. According to another aspect of the invention, the voicemail system uses voice prompts to prompt the user for an email address in the course of the redirected call. During the redirected call, the user can then speak an email address which the voicemail system converts to text by using conventional techniques and captures the user's email address. **Figure 5** shows display screen 420 of calling party's mobile device 324 displaying the contents of an SMS message received from the called party's voicemail system. The SMS message provides to the calling party a URI of a website at which a representation of the recorded voicemail message may be accessed, e.g. "http://bt.vinbox.com/vinbox/254342678253436273535".

### Access via Telephone

According to a further aspect of the invention, the notification can comprise a telephone number that the calling party can call to listen to the message that they left, retrieve status information on that message or both of these. This provides an audio-based means of verifying the message was successfully left for the called party. Instead of a URI, the network location may be indicated by means of a telephone number that the calling party can call to listen to audio prompts relating to access to a previously recorded message. The calling party can obtain access to the previously recorded message by responding to the audio prompts. For example, an audio prompt may be generated listing recorded messages left by the calling party and request the calling party to enter a digit corresponding to the position in the list of the recorded message that the calling party is to be provided access to. For example, the calling party can enter information in response to the prompts by speaking or using the terminal keypad to generate DTMF tones.

### Access via Webpage.

When the calling party activates a hyperlink or uses a URI or network address to access a network location, a webpage providing access to a representation of the message recorded for the called party is displayed. For example, the webpage will be displayed in a browser on a calling party-operated networked device such as a smart phone, tablet or personal computer (not shown) with network access. The network access may comprise access via a data network connection running over the calling party's telephone network or otherwise. The webpage may present the calling party with a number of options, for example:
i) see a transcription of the recorded message;
ii) listen to the recorded message;
iii) see the status of the recorded message (e.g. new, read, unread, deleted, etc.);
iv) request their own voicemail box to be provisioned by the provider of the called party's voicemail service.

The enhanced voicemail service described above creates value for the calling party in that they are now able to have a verifiable artefact of a message they recorded for the called party. While all of the above-listed features will be of benefit the calling party, features (i) to (iii) may also be considered of value to voicemail customers (e.g. the called party) who wish to offer a more convenient service to their calling parties.

The last option (iv) is of particular interest to service providers. Conventionally, there is no viral component to the way that conventional voicemail products are generally sold and distributed (i.e. the voicemail system of the called party generally provides a commoditized experience for the calling party). On using the voicemail service, a calling party may decide they wanted to become a subscriber to the same voicemail service, however, no straightforward mechanism exists for the calling party to express interest. The enhanced voicemail service described above enables a viral distribution of a voicemail service in that a calling party will be offered the opportunity to obtain their own voicemail box in the voicemail system when they are viewing the web page that has been generated for them by the voicemail system. The offer could be exposed via a link allowing the calling party to download a voicemail application to their mobile device from a relevant distribution mechanism (for example: Apple App Store^{™}, or Google Play^{™}).

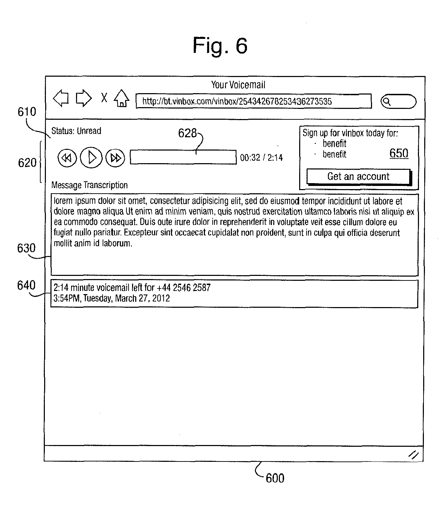

**Figure 6** shows an example of a webpage accessible through a network location according to an aspect of the invention. Webpage 600 comprises a number of fields for either or both of displaying information to the user (in this case, the calling party) or accepting commands in the form of mouse clicks or entered text from the user. Field 610 provides the status of the voicemail message (e.g. new, read, unread, deleted ... ). Field 620 provides the ability to playback the recorded message, with play, rewind and fast-forward buttons and progress bar 628. Field 630 provides a textual transcription of the recorded message. Field 640 provides historical information for example the date and time of recording and the telephone number of the called party. According to a preferred embodiment, field 650 prompts the calling party to subscribe to the voicemail service. Field 650 may include promotional information setting out the benefits of subscribing to the service and provide a hyperlink button to take the calling party to a sign-up webpage. This provides a valuable tool for the provider of the voicemail service in greatly simplifying the process of subscribing, e.g. for new users who recently have experienced the benefits of the voicemail service.

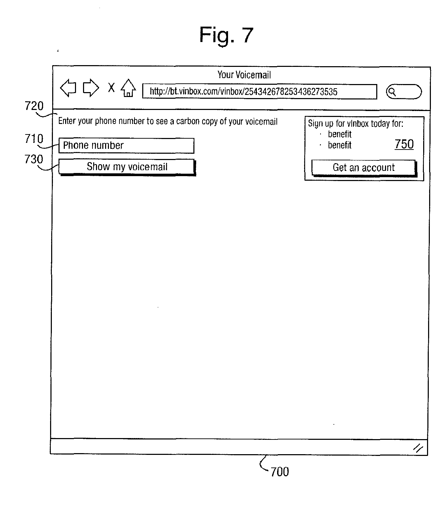

To improve security, the calling party may be required to pass an authentication challenge before being granted access to the webpage of Figure 6. **Figure 7** shows a security webpage presented to the calling party on activation of the link provided by the called party's voicemail system according to an alternative embodiment. Security webpage 700 comprises fields (represented in Figure 7 by field 710) where the user is to input authentication details as prompted by text 720. In a simple authentication system, the authentication details may consist of the calling party's telephone number. This can be checked by the voicemail system against the CLI detected when the calling party recorded the message. In a more secure system, the user's telephone number may be replaced by another form of identification or may be supplemented by a password specific to the user. According to one aspect of the invention, the authentication details may consist of the telephone device identifier (e.g. a Subscriber Identification Module (SIM) number) of the calling party's mobile device interrogated when the calling party recorded the message.

According to a further aspect of the invention, a password may be obtained by the voicemail system from the calling party by prompting the calling party during the process described, above, for recording the message. Once the calling party has entered suitable authentication details, hyperlink button 730 is enabled so that selecting button 730 takes the calling party to a webpage (for example that shown in Figure 6) providing access to the recorded voicemail message. According to a preferred embodiment, security webpage 700 also comprises field 750 prompting the calling party to subscribe to the voicemail service.

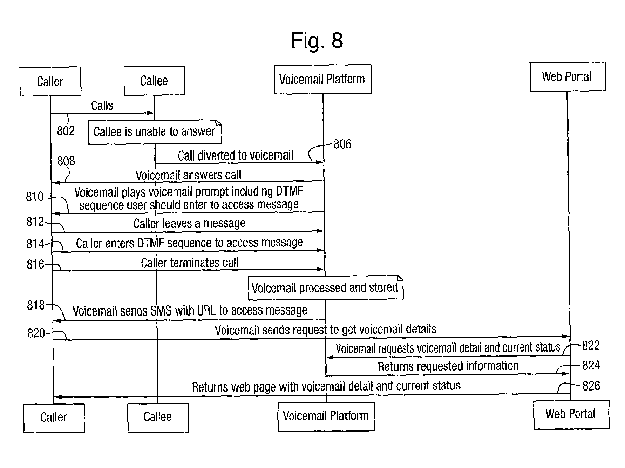

**Figure 8** shows typical message flows relating to operation of the voicemail system of Figure 3. In Figure 8, interactions are shown between caller (i.e. calling party terminal device 324), callee (i.e. called party terminal device 322), voicemail platform 300 and web portal 318. Figure 8 shows, in an upper part, interactions related to the act of recording a voicemail message. At 802, calling party initiates a telephone call to called party. The called party is unable to answer the call or decides not to answer and at 806, the call is diverted to voicemail platform 300. Voicemail platform 300 answers the call from calling party and at 810 prompts the calling party to use the called party's voicemail service, as described, above. At 812, calling party leaves a message for called party and then, at 814, enters the correct DTMF sequence to notify voicemail platform 300 that the calling party wants to have access to the message. At 816, calling party terminates the call by hanging up. The voicemail message left by the calling party is processed by voicemail processor 310 and passed to storage manager 306 for storing in file store 314.

**Figure** 8 shows, in the lower part of the diagram, interactions related to the calling party obtaining access to the message. At 818, voicemail processor 310 instructs SMS gateway 308 to send to calling party terminal device 324, a SMS message identifying a network location where the calling party may access a representation of the recorded voicemail message. At 820, calling party accesses the network location identified in the SMS message and contacts web portal 318 with a request for access to the recorded voicemail message. At 822, web portal 318 contacts HTTP Rest server 312 on voicemail platform 300 to request appropriate voicemail message content and details. HTTP Rest server 312 may in turn, access voicemail metadata database 304, storage manager 306 or both of these to acquire the requested information. At 824 HTTP Rest server 312 sends the requested information to web portal 318, which forwards these at 826 to calling party terminal device 324.

The called party may choose to enable the enhanced operation of the voicemail system, described above, for example through the TUI 302 or similar control mechanism. Alternatively, the called party may choose to enable this feature through a configuration website (not shown) operated by the provider of the voicemail service and hosted by HTTP rest server 312. For example, the called party may be able to manage their account, including selecting the enhanced operation, by logging on to a configuration website using secure credentials, such as an oAuth token or password/username combination. Further aspects of the invention provide alternative modes of authenticating the called party. A voicemail account associated with a PSTN line may authenticate the user based on a PIN entered by the user, the identity (CLI) of the PSTN line or a combination of these. A voicemail account associated with a mobile communications device (i.e. mobile communications network voicemail service) may use a telephone number associated with the mobile communications device, a telephone device identifier (e.g. a Subscriber Identification Module (SIM) number) or a combination of these. According to an alternative embodiment, enhanced operation may be enabled on the part of the voicemail service.

The above embodiments are to be understood as illustrative examples of the invention. Further embodiments of the invention are envisaged and will be evident to the skilled reader. It is to be understood that any feature described in relation to any one embodiment may be used alone, or in combination with other features described, and may also be used in combination with one or more features of another of the embodiments, or any combination of the embodiments. Furthermore, equivalents and modifications not described above will be evident to the skilled reader and may also be employed without departing from the scope of the invention, which is defined in the accompanying claims.

As will be understood by those skilled in the art, the invention may be implemented in computer program product software, any or all of which may be contained on various storage media so that the program can be loaded onto one or more general purpose computers or downloaded over a computer network using a suitable transmission medium. The computer program product used to implement the invention may be embodied on any suitable carrier, readable by a suitable computer input device, such computer program product comprising optically readable media, magnetic media, punched card or tape. The invention may be implemented by one or more hardware server system having one or more processors and memory storing one or more programs that when executed by the one or more processors cause the server system to perform the invention.

## Claims

1. A method of operating a voicemail system, comprising:
receiving at the voicemail system an incoming call;
in which the incoming call is received at the voicemail system at a first network location;
in which the method further comprises:
recording an audio message received from a calling party as part of the incoming call;
providing to the calling party a notification of a second network location; and
providing to the calling party through the second network location, access to a representation of the recorded audio message.

2. The method of claim 1 in which the first network location is a location in a first network and the second network location is a location in a second network.

3. The method of any of claims 1 to 2 in which the second network location is a location in a data network.

4. The method of any of claims 1 to 3 in which the first network location is a location in a telephone communications network.

5. The method of any of claims 1 to 4 in which the notification of a second network location comprises an indicator from which an internet protocol address of the second network location is derivable.

6. The method of any of claims 1 to 5 in which the incoming call is a call from the calling party directed to a called party and redirected to connect the calling party to the voicemail system at the first network location.

7. The method of any of claims 1 to 6 further comprising: authenticating the calling party by recording, in the course of the incoming call received at the first network location, a received indication of the source of the incoming call; obtaining via the second network location the telephone number of the calling party; and verifying the telephone number against the received indication.

8. The method of any of claims 1 to 7 in which the incoming call is terminated prior to providing to the calling party through the second network location, access to a representation of the recorded voicemail message.

9. The method of any of claims 1 to 8 comprising informing the calling party through the second network location as to the status of the recorded message.

10. The system as claimed in any of claims 1 to 9 in which the notification is provided in response to a request received in the course of the call.

11. The system as claimed in any of claims 1 to 10 in which the notification is provided to the calling party using information, derived as part of the call, indicating a network location of the calling party.

12. A voicemail system comprising:
a first interface associated with a first network location for receiving an incoming call;
a store for recording an audio message received from the calling party at the first network location as part of the incoming call;
a processor for providing to the calling party a notification of a second network location;
a second interface associated with the second network location and configured to provide to the calling party through the second network location, access to a representation of the recorded audio message.

13. The method of claim 12 in which the first network location is a location in a first network and the second network location is a location in a second network.

14. The method of any of claims 12 to 13 in which the second network location is a location in a data network.

15. The method of any of claims 12 to 14 in which the first network location is a location in a telephone communications network.

16. The system as claimed in any of claims 12 to 15 in which the incoming call is a call from the calling party directed to a called party and redirected to connect the calling party to the voicemail system at the first network location.
